# FASCICULE DE BREVET EUROPEEN

(11) **EP 3 566 580 B1**
(45) Date de publication et mention de la délivrance du brevet: **05.07.2023**
(21) Numéro de dépôt: 19173064.7
(22) Date de dépôt: 07.05.2019
(51) Int. Cl.: A01N 65/03

(54) **UTILISATION D'UN EXTRAIT OU D'UNE FRACTION D'EXTRAIT D'ALGUE ROUGE AGAROPHYTE COMME ÉLICITEUR/STIMULATEUR DE DÉFENSE VÉGÉTAL ET APPLICATION DUDIT EXTRAIT OU DE LADITE FRACTION D'EXTRAIT**
VERWENDUNG EINES EXTRAKTES ODER EINER EXTRAKTFRAKTION DER AGAROPHYT-ROTALGE ALS PFLANZENABWEHRELIZITOR/-STIMULATOR UND ANWENDUNG DIESES EXTRAKTES ODER DIESER EXTRAKTFRAKTION
USE OF AN EXTRACT OR AN EXTRACT FRACTION OF AGAROPHYTE RED ALGAE AS A PLANT DEFENSE ELICITOR/STIMULATOR AND APPLICATION OF SAID EXTRACT OR SAID EXTRACT FRACTION

(30) Priorité: 07.05.2018 FR 1870542
(43) Date de publication de la demande: 13.11.2019
(73) Titulaire: Societe d'Etude et d'Exploitation d'Algues et Produits Maritimes (SETEXAM), 14000 Kenitra (MA)
(72) Inventeur: Lebbar, Mohamed Salim, 14000 Kenitra (MA); Faugeron-Girard, Céline, 87590 Saint Just Le Martel (FR); Gloaguen, Vincent, 87230 Les Cars (FR)
(74) Mandataire: Cabinet Chaillot

(56) Documents cités:
- WO-A2-03/041679
- CN-A- 105 732 734
- FR-A1- 2 605 185
- US-A1- 2015 351 408
- RAMKISSOON ANTONIO ET AL: "Phytoelicitor activity of three Caribbean seaweed species on suppression of pathogenic infections in tomato plants", JOURNAL OF APPLIED PHYCOLOGY, KLUWER, DORDRECHT, NL, vol. 29, no. 6, 1 juin 2017 (2017-06-01), pages 3235-3244, XP036373947, ISSN: 0921-8971, DOI: 10.1007/S10811-017-1160-0 [extrait le 2017-06-01]
- DATABASE BIOSIS [Online] BIOSCIENCES INFORMATION SERVICE, PHILADELPHIA, PA, US; juin 2001 (2001-06), WEINBERGER FLORIAN ET AL: "Structure-activity relationships of oligoagar elicitors toward Gracilaria conferta (Rhodophyta)", XP002783842, Database accession no. PREV200100344063 & JOURNAL OF PHYCOLOGY, vol. 37, no. 3, juin 2001 (2001-06), pages 418-426, ISSN: 0022-3646
- XIUJUAN WANG ET AL: "Response of Pyropia haitanensis to agaro-oligosaccharides evidenced mainly by the activation of the eicosanoid pathway", JOURNAL OF APPLIED PHYCOLOGY., vol. 25, no. 6, 12 mars 2013 (2013-03-12), pages 1895-1902, XP055499757, NL ISSN: 0921-8971, DOI: 10.1007/s10811-013-0009-4

## Description

La présente invention concerne l'utilisation d'extraits, en particulier d'extraits naturels, ou de fractions d'extraits d'algues rouges agarophytes comme stimulateurs de défense naturelle chez les plantes terrestres. Elle concerne également des procédés d'obtention de ces extraits ou fractions d'extraits.

La présente invention consiste en la récupération d'extraits d'algues rouges agarophytes et leur utilisation comme éliciteurs ou stimulateurs des défenses naturelles ayant la capacité de provoquer chez la plante l'expression de la résistance face au stress biotique.

L'usage de produits chimiques tels que les pesticides dans le domaine agricole connaît une limitation imposée en France par le plan Ecophyto 2. L'objectif est de réduire de moitié l'usage de produits chimiques phytopharmaceutiques comme les pesticides d'ici 2025 tout en maintenant les rendements agricoles, ce qui suggère l'élaboration et la mise en application de méthodes alternatives comme l'usage d'éliciteurs qui permettront de mener à bien les ambitions du plan Ecophyto et de réduire les risques et impacts liés à l'usage des pesticides.

Les éliciteurs sont des molécules de signalisation qui initient la reconnaissance d'un microorganisme pathogène chez la plante. Ils sont capables de se lier de manière spécifique à des récepteurs membranaires. A la suite de l'interaction entre l'éliciteur et le récepteur spécifique, on observe, au niveau cellulaire, une cascade d'évènements de signalisation. Il existe une grande variété de récepteurs membranaires pouvant accueillir chacun un éliciteur bien défini (Benhamou, N., et Rey, P. (2012). Stimulateurs des défenses naturelles des plantes : une nouvelle stratégie phytosanitaire dans un contexte d'écoproduction durable.: I. Principes de la résistance induite. Phyto-protection 92, 1 ).

En ce sens, selon l'interaction, on observera:
- une dépolarisation membranaire, l'activation des protéines G, des protéines kinases, la libération intracellulaire d'ions calcium ;
- l'expression des gènes de défense participant à la voie de biosynthèse de phytohormones, d'enzymes, des protéines de stress, des inhibiteurs de protéases, des métabolites secondaires à potentiel antimicrobien dont les phytoalexines ;
- l'accumulation de formes actives de l'oxygène ou FAOs, molécules très actives présentant une activité antimicrobienne directe, aussi impliquées dans les réactions d'hypersensibilité et dans le renforcement de la paroi cellulaire.

L'accumulation de FAOs est un évènement qui enclenche la production de radicaux libres normalement présents dans la plante en faible quantité. Lors d'une agression, cet équilibre est rompu et la surproduction de radicaux libres est toxique pour le pathogène mais aussi pour la plante car ils peuvent endommager des molécules comme l'ADN, les protéines, certaines enzymes et les lipides membranaires. La zone d'attaque du pathogène peut ainsi être nécrosée (réaction hypersensible). Afin de minimiser cet effet négatif des FAOs, la plante possède des enzymes canalisant leur périmètre d'action dont la peroxydase. Le burst oxydatif s'accompagne donc généralement d'une production en peroxydases, enzymes désactivant les FAOs comme H2O2 qui constitue donc potentiellement un marqueur de défense de la plante.

Les évènements de signalisation varient d'une plante à une autre en termes d'intensité et d'ordre d'apparition et jouent un rôle majeur dans la transduction du signal de stress. Selon la nature de l'éliciteur, différentes réponses sont donc mises en place afin de résister contre le pathogène. Parmi ces réponses, on peut observer un renforcement pariétal. Une papille est synthétisée à l'endroit où entrent les organismes pathogènes.

L'apposition rapide et localisée de composés phénoliques, de silice, de callose, de protéines, de glycoprotéines (HRGPs), de subérine ou de lignine permet d'épaissir la paroi cellulaire (Garcia-Brugger, A., Lamotte, O., Vandelle, E., Bourque, S., Le-courieux, D., Poinssot, B., Wendehenne, D., et Pugin, A. (2006). Early Signaling Events Induced by Elicitors of Plant Defenses. Molecular Plant-Microbe Interactions 79, 711-724*;* Senthil-Kumar, M., et Mysore, K.S. (2013). Nonhost Resistance Against Bacterial Pathogens: Retrospectives and Prospects. Annual Review of Phytopathology 51, 407-427)*.*

La production de lignine dans la zone agressée s'effectue à l'aide d'enzymes catalytiques comme la phénylalanine ammonia-lyase (PAL) qui est indispensable à la biosynthèse des phénylpropanoides.

La plante possède un arsenal varié lui permettant de se défendre et de s'adapter au type de stress auquel elle est soumise. Le type de résistance induit par les éliciteurs est la résistance systémique acquise. C'est une résistance généralisée à l'ensemble de la plante. Elle permet une défense optimisée contre le pathogène et contre de nouvelles attaques potentielles. Elle permet notamment à la plante d'être en état de veille constant tant que l'effet du SDN est actif. C'est une méthode préventive qui induit la résistance chez la plante et réduit considérablement le temps de réponse face à l'attaque d'un pathogène. La stratégie adoptée est de fournir à la plante un éliciteur et ce, à faible concentration, afin de réduire considérablement le temps de réponse face à une agression. (Levine, A., Tenhaken, R., Dixon, R., et Lamb, C. (1994). H2O2 from the oxidative burst orchestrates the plant hypersensitive diseuse résistance response. Cell 79, 583-593*;* Bolwell, G.P. (1999). Role of active oxygen species and NO in plant defence responses. Current Opinion in Plant Biology 2, 287-294*).*

On peut distinguer les éliciteurs d'origine biotique, des stress abiotiques comme les métaux lourds, certains détergents, certains antibiotiques, les rayonnements UV. Il est fréquent de trouver des éliciteurs biotiques dans les algues. En effet, les algues rouges, vertes et brunes possèdent des polysaccharides pariétaux variés et spécifiques capables d'agir comme éliciteurs biotiques en tant que tels ou sous une forme dépolymérisée (Vera, Marine Drugs, 2011, 9, 2514-2525). En particulier, les algues rouges riches en carraghénanes (soit carraghénophytes) possèdent des carraghénanes dont les dérivés oligosaccharidiques ont des propriétés élicitrices (US 20100173779 A1 et US 20110099898 A1). A noter que les carraghénanes se différencient des agars par l'absence de L-Galactose et du 3,6 anhydro-L-galactose exclusifs aux agars. Certaines algues vertes possèdent des ulvanes qui, une fois dépolymérisés, agissent comme éliciteurs (WO2005094588 A1). Concernant les algues brunes, ces dernières sont riches en laminarine qui est un glucane de réserve agissant comme éliciteur (WO 1994000993 A1). Il existe des oligoagars de degré de polymérisation (DP)4 obtenus par dépolymérisation enzymatique et capables d'éliciter l'algue rouge Gracilaria ( Weinberger, F., Friedlander, M., et Hoppe, H.-G. (1999). Oligoagars elicit a physiological response in Gracilaria conferta (Rhodophyta). Journal of Phycology 35, 747-755*).*

La Société déposante a maintenant découvert des glucides et fragments de glucides d'algues rouges agarophytes comme celles des genres *Gelidium* et *Gracilaria* qui présentent une activité élicitrice. La récupération de ces substances d'origine naturelle est effectuée dans l'objectif d'une application biologique respectueuse de l'environnement. Ces substances naturelles ne nécessitent pas une dépolymérisation préalable pour activer leur caractère éliciteur ; elles sont actives en tant que telles. Aussi, ces substances élicitrices sont hydrosolubles, ce qui conforte leur caractère naturel.

L'invention porte ainsi notamment sur des extraits de molécules naturellement présentes dans *Gelidium sesquipedale* et capables de provoquer une augmentation de certains marqueurs de l'élicitation, tels que la callose, les composés phénoliques, les activités enzymatiques de la peroxydase et celle de la phénylalanine-ammonia-lyase (PAL). L'invention permet d'améliorer la résistance systémique acquise et/ou la résistance systémique induite en accélérant sa mise en place et en assurant une défense généralisée chez la plante.

Par la demande de brevet japonais JP 2014091709, on connaît des agents favorisant la croissance des plantes consistant en une eau traitée par un alcalin obtenue après le traitement alcalin d'une algue rouge et lavage de l'eau de traitement obtenue lors d'un procédé de fabrication d'agar. Il s'agit d'une application différente de celle selon la présente invention, ces agents étant présentés comme contenant des minéraux en provenance de l'eau de mer d'une manière bien équilibrée, de tels minéraux participant à la croissance de la plante.

Antonio Ramkissoon, Adesh Ramsubhag et Jayaray Jayaraman, J.Appl. Phycol (2017) 29:3235-3244 décrivent l'activité phytoélicitrice d'extraits de trois espèces d'algues des Caraïbes provoquant la diminution des symptômes d'infections pathogènes chez des plants de tomate. Les extraits obtenus sont des mélanges complexes de molécules. Contrairement à cela, la présente invention porte sur des extraits ou fractions d'extraits contenant des oligosaccharides bien définis, jamais évoqués dans l'article cité. Par ailleurs, selon cet article, l'extrait est pulvérisé à une concentration de 0,5%, soit de 5 g/L. Selon la présente invention, les extraits/fractions d'extraits ont été appliqués à des concentrations bien plus favorables pour les plantes, lesquelles sont comprises entre 1 et 10 mg/L, soit environ 1000 fois plus faibles. Ceci vient corroborer la nouveauté et l'intérêt des extraits/fractions d'extraits selon la présente invention. FR 2605185 A1 décrit un procédé pour cultiver une plante qui comprend l'utilisation d'un oligosaccharide accélérant la croissance d'une plante. US 2015/0351408 A1 décrit un procédé pour élaborer un biostimulant suivant lequel on broie l'algue fraîche, on la lave, on traite par un acide, puis par KOH, on sépare et récupère la phase liquide, puis on y ajoute de la léonardite américaine hydrolysée, et l'on sèche pour obtenir une poudre. Weinberger et al., Journal of Phycology, vol. 37, no. 3, juin 2001, 418-426, décrivent la préparation, par hydrolyse enzymatique partielle de l'agarose, de fractions néoagarosaccharide avec un degré de répétition de disaccharide allant de 1 (néoagarobiose) à plus de 8 (néoagarohexadécaose). XIUJUAN WANG et al., Journal of Applied Phycology, vol. 25, no. 6, 12 mars 2003, 1895-1902, décrivent l'amélioration de la santé d'une algue non terrestre, l'algue rouge marine Pyropia haitanensis par des agaro-oligosaccharides. WO 03/041679 A2 décrit l'utilisation d'un extrait hydroalcoolique d'algue rouge pour la préparation d'une composition alimentaire ou cosmétique, destinée à induire la synthèse des protéines de stress lors de contraintes physiques sur les cellules. CN105732734 A concerne l'algue rouge Palmaria palmerte, espèce non agarophyte, laquelle est soumise à une extraction par du fluide supercritique (CO2) pour l'obtention de floridoside.

La présente invention a d'abord pour objet une utilisation comme éliciteur/stimulateur de défense chez les plantes terrestres d'un extrait ou d'une fraction d'extrait d'au moins une algue rouge agarophyte, ledit extrait ou ladite fraction d'extrait contenant au moins un oligosaccharide ayant de 2 à 50 unités ose liées entre elles de façon covalente, et des polysaccharides ayant plus de 50 unités ose liées entre elles de façon covalente pouvant être contenus sans dépasser 0,01% en poids par rapport aux oligosaccharides/polysaccharides totaux.

On a défini ici un oligosaccharide comme un composé contenant de 2 à 50 unités ose et un polysaccharide comme un composé contenant plus de 50 unités ose.

On a dans ce qui suit utilisé également l'expression « degré de polymérisation » (DP) pour exprimer ce nombre d'unités ose.

Les algues rouges agarophytes peuvent être choisies parmi celles des genres *Gelidium* et *Gracilaria,* et peut notamment être *Gelidium sesquipedale.*

En particulier, l'extrait ou la fraction d'extrait peut contenir, comme oligosaccharide(s), au moins un oligosaccharide natif ou substitué choisi parmi :
- un (Gal)n-Glycérol avec Gal = unité galactose et 2 ≤ n ≤ 4 ;
- un disaccharide constitué de deux unités hexose ;
- un disaccharide constitué de deux unités acide galacturonique.

L'extrait ou la fraction d'extrait peut aussi contenir au moins un monosaccharide, natif ou substitué par le glycérol ou un méthyle, le ou les monosaccharides pouvant être choisis parmi le floridoside/isofloridoside (Gal-glycérol), le 3,6-anhydrogalactose, l'acide galacturonique, les hexoses ou les pentoses.

Ledit extrait peut consister en un extrait :
- par une solution aqueuse alcaline à pH basique, notamment par de la soude à 0,1 - 10% en poids, de préférence 2-5% en poids, en faisant suivre par une neutralisation par un acide et par une élimination au moins partielle des polysaccharides ayant plus de 20 unités ose reliées entre elles de façon covalente, par exemple par précipitation du filtrat à l'éthanol ; ou
- par une solution hydroalcoolique, l'alcool ayant par la suite été éliminé ; ou
- par un alcool tel que l'éthanol, l'alcool ayant par la suite été éliminé,

un extrait pouvant également être : l'une des phases aqueuses obtenues par les filtrations effectuées lors du procédé d'extraction de l'agar à partir d'une algue rouge agarophyte respectivement après traitement alcalin de l'algue, après rinçage à l'eau du résidu ainsi obtenu, après neutralisation à l'acide du résidu obtenu lors de ce rinçage, après rinçage à l'eau du résidu obtenu lors de cette neutralisation ; ou l'extrait obtenu par l'extraction à chaud du résidu obtenu en même temps que le gel d'agar lors d'une extraction à chaud/filtration du résidu obtenu après ce dernier rinçage à l'eau ; et le jus de synérèse obtenu après congélation-décongélation et/ou par pressage mécanique de ce gel d'agar,
et une fraction d'extrait résulte d'un fractionnement d'un extrait par ultrafiltration ou par chromatographie d'exclusion stérique,
ledit extrait ou ladite fraction d'extrait pouvant ensuite avoir été concentré, déshydraté ou lyophilisé.

L'extrait ou la fraction d'extrait peut avoir été préparé(e) par un procédé suivant lequel on a conduit une extraction aqueuse, alcoolique ou hydroalcoolique, à chaud, de ladite ou desdites algues rouges agarophytes, avec élimination ultérieure de l'alcool dans le cas d'une extraction alcoolique ou hydroalcoolique,
ladite extraction pouvant être une extraction aqueuse alcaline, en particulier une extraction aqueuse alcaline, suivant laquelle on obtient, après ledit traitement alcalin et par filtration, d'une part, une phase aqueuse (A1) et d'autre part un résidu (R1) ;
puis on peut effectuer un rinçage à l'eau distillée dudit résidu (R1) pour obtenir après filtration d'une part une phase aqueuse (A2) et d'autre part un résidu (R2) ;
puis on peut effectuer une neutralisation à l'acide dudit résidu (R2) pour obtenir, après filtration, d'une part une phase aqueuse (A3) et d'autre part un résidu (R3) ;
puis on peut effectuer un rinçage à l'eau distillée dudit résidu (R3) pour obtenir, après filtration, d'une part, une phase aqueuse (A4) et, d'autre part, un résidu (R4) ;
puis on peut effectuer une extraction à chaud et une filtration dudit résidu (R4) pour obtenir d'une part un résidu (R5) et, d'autre part, un gel d'agar ;
puis on peut conduire une extraction à l'eau chaude dudit résidu (R5) pour obtenir une phase aqueuse (A5) ;
puis on peut conduire une congélation - décongélation et/ou pressage mécanique dudit gel d'agar pour obtenir d'une part, un jus de synérèse (JS) et un gel d'agar pur ;
lesdites phases aqueuses (A1) à (A5) et ledit jus de synérèse (JS) représentant chacun également un extrait recherché,
ledit extrait pouvant être soumis à un traitement par l'éthanol pour obtenir d'une part, un extrait éthanolique (EE) et d'autre part un précipité, ledit extrait éthanolique étant soumis à un fractionnement par ultrafiltration ou par exclusion stérique permettant d'isoler une fraction d'extrait contenant au moins un oligosaccharide ayant de 2 à 50 unités ose reliées entre elles de façon covalente, et des polysaccharides ayant plus de 50 unités ose liées entre elles de façon covalente pouvant être contenus sans dépasser 0,01% en poids par rapport aux oligosaccharides/polysaccharides totaux,
ledit extrait ou ladite fraction d'extrait pouvant ensuite avoir été concentré, déshydraté ou lyophilisé.

L'extrait ou la fraction d'extrait selon l'invention peut se trouver en milieu aqueux, ou peut se présenter sous forme pulvérulente.

L'invention porte également sur un procédé pour stimuler la défense naturelle chez une plante terrestre, caractérisé par le fait qu'il consiste à appliquer sur l'ensemble de la plante ou sur une partie de celle-ci, comprenant l'appareil végétatif, racinaire, les fruits, les graines et les semences de ladite plante, ou encore sur le sol ou le substrat de culture de la plante, une quantité efficace pour stimuler les défenses naturelles, de ladite plante, de l'extrait ou de la fraction d'extrait tel(le) que défini(e) selon la présente invention, à l'état liquide ou sous forme de poudre ou de granules.

On peut traiter les plantes agronomiquement utiles, de grande culture, dont les oléagineux comme le tournesol ou le soja, les protéagineux comme le pois chiche, les céréales comme le maïs ou le blé, les arbres fruitiers comme les poiriers, les pommiers, les nectariniers, les plantes horticoles comme les rosiers, les plantes prairiales, et les plantes maraîchères comme la tomate, le melon, la laitue ou les épinards.

On peut appliquer l'extrait liquide ou la fraction d'extrait liquide sur la plante ou partie de plante ou graines ou semences ou sur le sol ou substrat à une concentration d'oligosaccharide(s) de 0,0001 à 100 g/L, de préférence de 1 à 10 mg/L. On peut également appliquer l'extrait ou la fraction d'extrait à l'état liquide ou sous forme de poudre ou de granules à raison de 1 à 1000 g d'oligosaccharides par hectare.

L'application peut être effectuée 1 à 20 fois, de préférence 3 à 5 fois par année de culture.

L'invention porte également sur une composition pour la mise en oeuvre du procédé selon l'invention, caractérisée par le fait qu'elle consiste en un extrait ou fraction d'extrait tel(le) que défini(e) ci-dessus obtenu(e) à partir de *Gelidium sesquipedale,* à l'état liquide ou sous forme de poudre ou de granules et le cas échéant incorporé dans un produit phytosanitaire ou fertilisant ou avec au moins un adjuvant choisi parmi les tensio-actifs, les dispersants, les agents conservateurs, les antimottants, les oligoéléments, les amendements, les éléments correcteurs de carence, les fongicides, les insecticides, les herbicides, les hormones de croissance.

### Exemple 1 : Obtention d'un extrait alcalin et fractionnement

100 g d'algues sèches Gelidium sesquipedale sont mélangées à 1500 mL d'une solution de soude à 2% en poids/volume et agitées pendant 1 heure à 70-80°C. On neutralise à l'aide d'acide sulfurique à 1% en volume.

Ensuite, le mélange est filtré sur une toile de Nylon de porosité 53 µM. Les particules insolubles sont retenues sur le filtre et éliminées.

La fraction polysaccharidique de degré de polymérisation supérieur à environ 50 est éliminée par précipitation par 3 volumes d'éthanol.

La fraction éthanolique contient notamment les oligosaccharides et monosaccharides. Ensuite, l'éthanol est éliminé par évaporation rotative pour obtenir une solution aqueuse d'extrait.

### Exemple 2 : Fractionnement de l'extrait de l'Exemple 1 par ultrafiltration

Le filtrat (ou solution aqueuse d'extrait) obtenu est fractionné par ultrafiltration sur membrane de porosité de 5kDa dans un premier temps afin d'éliminer les composés de masses supérieures ou égales à 5000 Da (dont des polysaccharides) et contenus dans le rétentat.

Le perméat est récupéré et soumis à une ultrafiltration sur membrane 1000 Da, ce qui permet l'obtention de fractions enrichies en oligosaccharides dans le rétentat-1000 Da.

Les fractions ont été caractérisées à l'aide de dosages colorimétriques des oses selon la méthode de Dubois et al. (DuBois, M., Gilles, K.A., Hamilton, J.K., Rebers, P.A., et Smith, F. (1956). Colorimétrie Method for Détermination of Sugars and Related Substances. Analytical Chemistry 28, 350-356*)* des acides uroniques (Blumenkrantz, N., et Asboe-Hansen, G. (1973). New method for quantitative determination of uronic acids. Analytical Biochemistry 54, 484-489*),* des composés phénoliques (méthode de Singleton, Singleton V L & Rossi J A Jr. Colorimetry of total phenolics with phosphomolybdic-phosphotungstic acid reagents. Amer. J. Enol. Viticult. 16:144-58, 1965*),* des protéines (Bradford, M.M. (1976). A rapid and sensitive method for the quantitation of microgram quantities ofprotein utilizing the principle of protein-dye binding. Analytical Biochemistry 72, 248-254*).* Puis, la composition monosaccharidique est établie par CPG après obtention des dérivés acétates d'alditol selon Stevenson, T.T., and Furneaux, R.H. (1991). Chemical methods for the analysis of sulphated galactans from red algae. Carbohydrate Research 210, 277-298*.* La teneur en matières sèches de l'extrait est déterminée par pesée après lyophilisation.

**Tableau 1**

| Compositions déterminées par dosages colorimétriques (% massique) | | | | | | |
|---|---|---|---|---|---|---|
| Fraction | % acides uroniques | % Oses neutres | % composés phénoliques | % Protéines | mg SO4 /mg ose | % inorganique |
| Re 5kDa | 1.6 | 51,4 | 3,2 | 1.3 | 1,8 | 39 |
| Pe 5kDa | 0.4 | 38,6 | 0,4 | 0,8 | 1,6 | 40,7 |
| Re 1kDa | 0.8 | 81,3 | 0,9 | 2.2 | 0,5 | 14,3 |
| Pe 1kDa | 0.4 | 29,9 | 0,1 | 0,4 | 1 | 45,4 |

| | | | | | | |
|---|---|---|---|---|---|---|
| Re : rétentat Pe : perméat | | | | | | |

Les dosages colorimétriques sont révélateurs d'une prédominance en glucides. Les fractions possèdent aussi des protéines, composés phénoliques et acides uroniques mais en proportions inférieures à celle en oses neutres. Les glucides présents possèdent des fonctions sulfates dont la proportion diffère selon la fraction.

**Tableau 2**

| Composition monosaccharidique (% molaire) | | | | | | | | | | |
|---|---|---|---|---|---|---|---|---|---|---|
| Fraction | 3,6 An-Gal | Gal | Xyl | Glc | Man | Fuc | Hha | Gal A | Glc A | 6-O-Me-Gal |
| Re 5kDa | 43 | 12 | 18 | ND | 1 | 1 | 2 | 10 | 5 | 3 |
| Pe 5kDa | 20 | 44 | 12 | 2 | 7 | 11 | ND | 2 | 1 | 1 |
| Re 1kDa | 28 | 25 | 29 | 1 | 1 | 5 | ND | 4 | 7 | ND |
| Pe 1kDa | 37 | 25 | 20 | 4 | 5 | 9 | ND | ND | ND | ND |

| | | | | | | | | | | |
|---|---|---|---|---|---|---|---|---|---|---|
| 3,6 An-Gal : 3,6 anhydrogalactose; Gal: Galactose; Xyl: Xylose ; Glc: Glucose ; Man : Mannose ; Fuc : Fucose ; Rha : Rhamnose ; Gal A : Acide galacturonique; Glc A: Acide glucuronique; 6-O-Me-Gal : 6-O-méthyi-galactose ND : non détecté Re : Rétentat Pe : Perméat | | | | | | | | | | |

On observe dans la composition monosaccharidique déduite de l'analyse CPG que le Galactose est majoritaire notamment sous sa forme 3,6 anhydrogalactose.

**Tableau 3**

| Rendement massique | |
|---|---|
| Fraction | Pourcentage massique par rapport à la masse d'algues de départ (% MS) |
| Re 5kDa | 5.2 |
| Pe 5kDa | 32.8 |
| Re 1kDa. | 5.8 |
| Pe 1kDa | 26,4 |

Les rendements massiques reflètent une distribution en masse du rétentat et du perméat issus de l'ultrafiltration à 5kDa inégale et on peut observer que les composés dont la taille est supérieure à 5 kDa représentent 5% de la masse sèche initiale en algues et que 33% en masse de la biomasse sèche initiale sont récupérés dans le perméat et contiennent donc des composés de taille inférieure à 5 kDa.

L'ultrafiltration à 1kDa effectuée sur le perméat récupéré lors de l'ultrafiltration à 5 kDa permet l'obtention d'un nouveau perméat et d'un rétentat avec une répartition proche de celle obtenue pour l'ultrafiltration à 5 kDa.

L'ultrafiltration à 1kDa permet aussi d'éliminer dans le perméat les composés inorganiques et les mono et disaccharides.

### Exemple 3 : Obtention d'un extrait aqueux ou alcoolique ou hydroalcoolique

100 g d'algues sèches sont mélangées à 1 L d'eau ou d'éthanol ou d'un mélange eau-éthanol (20/80 v/v) et agitées pendant 1 heure à 50-60°C. Puis le mélange est filtré sur toile de Nylon de porosité 53µm. Les particules insolubles sont retenues sur le filtre et éliminées.

**Tableau 4**

| Pourcentage en oses neutres de la fraction | |
|---|---|
| Fraction | %ON |
| Extraction H₂O | 15,2 |
| Extraction H₂O / EtOH | 54 |
| Extraction EtOH | 1,5 |

**Tableau 5**

| Pourcentage massique de la fraction par rapport à la masse d'algue sèche de départ | |
|---|---|
| Fraction | Pourcentage massique (% matières sèches) |
| Extraction H₂O | 1,83 |
| Extraction H₂O / EtOH | 0,49 |
| Extraction EtOH | 0,19 |

L'extraction à l'eau ou à l'éthanol permet de récupérer des fractions contenant des glucides allant de 1 à 15% en masse de la fraction.

L'extraction effectuée avec un mélange eau/éthanol permet de récupérer une fraction contenant 52-54 % en oses. Les rendements massiques des extractions effectuées à l'eau, à l'éthanol ou à l'aide d'un solvant eau-éthanol ne dépassent pas les 2% par rapport à la masse d'algues sèches.

### Exemple 4 : Fractionnement de l'extrait de l'Exemple 1 par chromatographie d'exclusion stérique

La solution aqueuse d'extrait obtenue à l'Exemple 1 est fractionnée par chromatographie d'exclusion stérique sur colonne avec, comme phase stationnaire, du gel de polyacrylamide de seuil d'exclusion 100-1800 Da. La phase mobile est de l'eau ultrapure dégazée ; le débit est de 0,18 ml.min⁻¹. Les fractions collectées sont de 1,8 ml. Elles sont analysées par CCM et celles contenant des glucides et présentant le même profil sont réunies : trois fractions sont obtenues F1, F2 et F3.

Ces fractions ont été caractérisées à l'aide de dosage colorimétriques, par CPG et par ESI-MS.

**Tableau 6**

| Le Tableau 6 ci-après donne le rendement massique. | |
|---|---|
| Fraction | Pourcentage massique par rapport à la masse d'algues de départ (% matières sèches) |
| F1 | 3,4 |
| F2 | 3,2 |
| F3 | 1,8 |

Les fractions F1 et F2 représentent chacune 3-4% en poids de la masse en algues de départ et la fraction F3 représente 1,8%.

**Tableau 7**

| Le Tableau 7 ci-après, donne les compositions déterminées par dosages colorimétriques. | | | | | | |
|---|---|---|---|---|---|---|
| Fraction | % Acides uroniques | % Oses neutres | % Phénols | % Protéines | moles SO₄ / mole ose | % inorganique |
| | (% massique/fraction) | | | | | |
| F1 | 2,1 | 32,0 | 2,0 | 4,7 | 0,5 | 17 |
| F2 | 0,9 | 15,4 | 0,7 | 0,6 | 0,1 | 0,3 |
| F3 | 0,5 | 9,6 | 0,3 | 0,6 | 0,3 | 1 |

Les dosages colorimétriques démontrent une prépondérance en glucides. Les fractions possèdent aussi des protéines, des composés phénoliques et des acides uroniques et les oses récupérés sont sulfatés en particulier chez les fractions F1 et F3.

Le Tableau 8 ci-après donne la composition monosaccharidique (% molaire) des fractions F1, F2 et F3.

**Tableau 8**

| Fraction | 3,6 An-Gal | Gal | Xyl | Glc | Man | Fuc | Gai A |
|---|---|---|---|---|---|---|---|
| F1 | 40,2 | 18,6 | 8,2 | 2,0 | 18,1 | 7,9 | 5,0 |
| F2 | 38,1 | 8,9 | 5,9 | 2,0 | 16,4 | 8,2 | 20,5 |
| F3 | 3,2 | 86,3 | 3,5 | 3,1 | 3,8 | ND | ND |

| | | | | | | | |
|---|---|---|---|---|---|---|---|
| 3,6 An-Gal: 3,6 anhydrogafactose ; Gal: Galactose ; Xyl : Xylose ; Glc: Glucose ; Man : Mannose ; Fuc : Fucose ; Gal A : Acide galacturonique ND : non détecté | | | | | | | |

On observe dans la composition monosaccharidique déduite de l'analyse CPG que le Galactose est majoritaire notamment sous sa forme 3,6 anhydrogalactose. On note aussi la présence de xylose, de glucose, de mannose, de fucose, d'acide galacturonique. Composition des fractions F1, F2 et F3 par spectrométrie d'ionisation par électroné-bulisation (électrospray) (ESI) :
Spectre ESI de la fraction F1 :

| Masse observée m/z | Masse théorique (MW) | DP | Composé identifié |
|---|---|---|---|
| 170,97 = M - H + 2Na | 125,99 | | Acide iséthionique |
| 161,05 = M - H | 162,05 | 1 | 3,6 anhydrogalactose |
| 179,06 = M-H | 180,06 | 1 | Hexose |
| 203.06 = M - H + Na | | | |
| 277,1= M-H + Na | 254,1 | 1 | Floridosidefisofloridoside |
| 365,12= M - H + Na | 342,12 | 2 | (Hexose)₂ |
| 393,22= M - H + Na | 370,22 | 2 | (Acide galacturonique)₂ |

On observe dans le spectre en mode négatif la présence de 3,6 anhydrogalactose et d'hexose (galactose, mannose ou glucose) de DP1.

On observe dans le spectre en mode positif la présence d'hexose de DP1, d'acide iséthionique, de floridoside/isofloridoside, d'hexose de DP2, d'acide galacturonique DP2.

Spectres ESI de la fraction F2

| Masse observée m/z | Masse théorique (MW) | DP | Composé identifié |
|---|---|---|---|
| 170,97 = M - H + 2Na | 125,99 | | Acide iséthionique |
| 161,05 = M - H | 162 | 1 | 3,6 anhydrogalactose |
| 253,06= M - H + Na | 180 | 1 | Hexose |
| 277,1= M - H + Na | 254 | 1 | Floridoside/isofloridoside |
| 365,12= M - H + Na | 342 | 2 | (Hexose)₂ |
| 439,16= M - H + Na | 418 | 2 | Dérivé de floridoside : (hexose)₂-glycérol |
| 527,17= M - H + Na | 504 | 3 | (Hexose)₃ |
| 601,21= M - H + Na | 578 | 3 | Dérivé de floridoside : (hexose)₃-glycérol |
| 689,22= M - H + Na | 666 | 4 | (Hexose)₄ |
| 763,26= M - H + Na | 140 | 4 | Dérivé de floridoside : (hexose)₄-glycérol |

On observe dans le spectre en mode négatif la présence de 3,6 anhydrogalactose et d'hexose de DP1. Dans le spectre en mode positif, on note la présence d'hexose de DP1 à 4, d'acide iséthionique, de floridoside/isofloridoside, de dérivés de floridoside de DP2 soit 2 hexoses et une fonction glycérol, DP3 soit 3 hexoses et une fonction glycérol et DP4 soit 4 hexoses et une fonction glycérol.

Spectre ESI mode positif de la fraction F3 :

| Masse observée m/z | Masse théorique (MW) | DP | Composé identifié |
|---|---|---|---|
| 170,07 = M - H + 2Na (traces) | 125,99 | | Acide iséthionique |
| 277,1= M - H + Na | 254 | 1 | Floridoside/isofloridoside |
| 439,16= M - H + Na | 416 | 2 | Dérivé de floridoside (hexose)₂₋glycérol |
| 601,21= M - H + Na | 578 | 3 | Dérivé de floridoside (hexose)₃-glycérol |

On observe dans le spectre en mode positif la présence d'acide iséthionique, de floridoside/isofloridoside et de dérivés de floridoside de DP2 et DP3.

Spectre MS/MS des pics correspondant à la masse de 253 Da attribuée au floridoside/isofloridoside (M-H) :

| m/z théorique (Chen. et al. 2014) | m/z expérimental |
|---|---|
| 59,51 | 59,01 |
| 71,37 | 71,01 |
| 87,38 | 89,02 |
| 101,21 | 101,02 |
| 119,27 | 119,03 |
| 125,23 | 125,02 |
| 161,22 | 161,04 |

Juanjuan Chen, Dandan Song, Qijun Luo, Tong Mou, Rui Yang, Haimin Chen, Shan He, and Xiaojun Yan (2014). Détermination of Floridoside and Isofloridoside in Red Algae by High-Performance Liquid Chromatography-Tandem Mass Spectrometry Analytical Letters Volume 47, Pages 2307-2316

On remarque que les pics du spectre théorique de fragmentation (MS/MS) du floridoside/isofloridoside correspondent à ceux obtenus expérimentalement. Cela démontre la présence de floridoside/isofloridoside dans les fractions F1 à F3.

Spectre MS/MS du pic correspondant à la masse de 416 Da attribuée au dérivé du floridoside de DP2 (M-H) :

Le pic m/z à 416 correspondant au dérivé DP2 du floridoside est présent et après fragmentation (perte d'un hexose), les pics du spectre de fragmentation du pic m/z à 253 expérimental apparaissent. Cela met en évidence la présence de dérivés de floridoside à DP2 (pic correspondant à une masse de 416 Da) dans les fractions F2 et F3. Après fragmentation d'un hexose on retrouve le spectre de fragmentation du floridoside/isofloridoside.

Spectres MS/MS du pic correspondant à la masse de 601 Da attribuée au dérivé du floridoside de DP3 (M-H) :

| m/z expérimental | Masse observée (MW) | DP | Composé identifié |
|---|---|---|---|
| 277,09 = M - H + Na | 254 | 1 | Floridoside/isofloridoside |
| 439,15 = M - H + Na | 416 | 2 | Dérivé de floridoside : (hexose)₂-glycérol |
| 601,19) = M - H + Na -glycérol | 578 | 3 | Dérivé de floridoside : (hexose)₃-glycérol |

La fragmentation du pic à 601 met en évidence la présence de dérivés de floridoside à DP3 dans les fractions F2 et F3.

Bilan des analyses par spectrométrie ESI :

| Famille | DP | MW | F1 | F2 | F3 |
|---|---|---|---|---|---|
| Acide iséthionique | | 125,99 | (+) | (+) | (+)traces |
| 3,6-AnGal | 1 | 162,05 | H | H | |
| | | | | | |
| | 1 | 180,06 | **(+)/(-)** | **(+)/(-)** | |
| | 2 | 342,12 | (+) | **(+)** | |
| Hexose Gal.Man.Glc | 3 | 504,17 | | (+) | |
| | 4 | 666,22 | | (+) | |
| | | | | | |
| Acide galacturonique | 2 | 370,22 | **(+)** | | |
| | 1 | 254,10 | (+) | (+) | (+)/(-) |
| | 2 | 416,16 | | (+) | **(+)/(-)** |
| Floridoside/isofloridoside et: dérivés | 3 | 578,21 | | (+) | (+)/(-) |
| | 4 | 740,26 | | (+) | |

| | | | | | |
|---|---|---|---|---|---|
| Légende: **gras** Espèces majoritaires de la fraction (+) Espèce observée en mode positif (-) Espèce observée en mode négatif | | | | | |

### Exemple 5 : Effet des fractions de l'Exemple 4 sur l'activation des mécanismes de défense chez les plantes comme suite à un stress biotique

Des lots de plants de tomate sont cultivés (*Solanum lycopersicum* variété marmande). Un lot de plantes âgées de 6 semaines, homogène, est constitué (couleur, nombre de feuilles). Les fractions obtenues selon l'Exemple 4 sont préparées sous forme de solution à 1, 2 et 10 mg/L dans du Tween à 0,05% en volume. Elles sont appliquées sous forme de pulvérisation foliaire jusqu'à ruissellement sur les plantules de tomates à T 0, T 2J et T 5J et 4 plantules sont utilisées par expérience.

100 µL d'une suspension de spores du champignon *Botrytis cinerea* à 10⁵-10⁶ spores/ mL de Tween à 0,05% en volume, sont déposés à T 7J sur les feuilles. Les feuilles sont récoltées à T 14J, congelées dans de l'azote liquide puis conservées à -20°C jusqu'à l'analyse.

Celle-ci consiste à doser des marqueurs de l'élicitation tels que la teneur en callose, la teneur en composés phénoliques, l'activité enzymatique de la peroxydase et de la phénylalanine-ammonia-lyase.

Les résultats représentent la moyenne de trois récoltes différentes et indépendantes (quatre plantes par modalité et par récolte).

La teneur en callose et la teneur en composés phénoliques sont dosées respectivement selon Hirano, Y., Pannatier, E.G., Zimmermann, S., et Brunner, I. (2004). Induction of callose in roots of Norway spruce seedlings after short-term exposure to aluminum. Tree Physiology 24, 1279-1283*) et* Singleton V L & Rossi JA Jr. Colorimetry of total phenolics with phosphomolybdic-phosphotungstic acid reagents. Amer. J. Enol. Viticult. 16:144-58, 1965*.*

L'activité enzymatique de la peroxydase est déterminée selon la méthode décrite par Shindler JS, Childs RE, Bradsley WG. (1976) Peroxidase from human cervical mucus, the isolation and characterisation. Eur J Biochem.; 65(2) 325-331*. ; celle de la PAL selon* Francini, A., Nali, C., Pellegrini, E., et Lorenzini, G. (2008). Characterization and isolation of some genes of the shikimate pathway in sensitive and résistant Centaurea jacea plants after ozone exposure. Environmental Pollution 151, 272-279*.*

Les résultats sont exprimés en pourcentage du témoin, le Tween à 0,05% en volume.

La fraction F3 appliquée sur les plants de tomate à une concentration de 1 mg/L provoque une augmentation de la teneur en callose deux fois supérieure à celle du témoin et pour une concentration de 2 mg/L, la teneur en callose est triplée. La fraction F1 à 1 mg/L provoque une augmentation de la teneur en composés phénoliques qui subit une hausse de l'ordre de 50% par comparaison avec le témoin.

**Tableau 9 : Teneur en callose exprimée en pourcentage du témoin**

| Fractions | Concentration (mg/L) | | |
|---|---|---|---|
| | 1 | 2 | 10 |
| F1 | 118 | 170 | 159 |
| F2 | 141 | 114 | 123 |
| F3 | 109 | 291 | 159 |

**Tableau 10 : Teneur en composés phénoliques exprimée en pourcentage du témoin**

| Fractions | Concentration (mg/L) | | |
|---|---|---|---|
| | 1 | 2 | 10 |
| F1 | 143 | 149 | 154 |
| F2 | 103 | 65 | 109 |
| F3 | 120 | 97 | 102 |

Une concentration de la fraction F1 de 1 mg/L stimule l'activité de la peroxydase de 70%. Une concentration de la fraction F1 de 2 mg/L renforce l'activité enzymatique de la phénylalanine-ammonia-lyase de 82%.

**Tableau 11 : Activité enzymatique de la peroxydase exprimée en pourcentage du témoin**

| Fraction | Concentration (mg/L) | | |
|---|---|---|---|
| | 1 | 2 | 10 |
| F1 | 154 | 169 | 157 |
| F2 | 136 | 88 | 168 |
| F3 | 135 | 114 | 81 |

**Tableau 12 : Activité enzymatique de la PAL exprimée en pourcentage du témoin**

| Fraction | Concentration (mg/L) | | |
|---|---|---|---|
| | 1 | 2 | 10 |
| F1 | 182 | 134 | 37 |
| F2 | 169 | 116 | 119 |
| F3 | 86 | 100 | 108 |

Les résultats obtenus permettent d'affirmer que les fractions extraites présentent bien une activité élicitrice.

Il est démontré que les fractions obtenues selon l'Exemple 2 possèdent une activité élicitrice car les marqueurs de l'élicitation sont plus élevés chez les plantes traitées que chez les plantes témoins. Aussi, la réponse de la plante est différente selon la fraction appliquée. Les trois fractions provoquent une augmentation de l'activité de la peroxydase de façon variable selon la concentration appliquée sur les plantes.

L'enzyme peroxydase est synthétisée lorsque la plante produit des FAOs pour limiter le stress oxydatif. De plus, l'enzyme phénylalanine-ammonia-lyase, participant à la voie de biosynthèse des phénylpropanoïdes antimicrobiens mais aussi à la synthèse de lignines et donc au renforcement de la paroi des cellules, voit son activité stimulée.

Le renforcement de la paroi comprend aussi la formation de callose et de composés phénoliques, la teneur de ces derniers étant augmentée grâce à l'application des fractions isolées de Gelidium. La stimulation de ces défenses naturelles peut permettre de freiner le pathogène et constitue un des premiers signes de résistance de la plante. La plante peut mieux se défendre en présence des extraits et fractions selon l'invention.

Les fractions élicitrices octroient à la plante une résistance accrue en activant et renforçant les marqueurs de l'élicitation.

## Revendications

1. - Utilisation comme éliciteur/stimulateur de défense chez les plantes terrestres d'un extrait ou d'une fraction d'extrait d'au moins une algue rouge agarophyte, ledit extrait ou ladite fraction d'extrait contenant au moins un oligosaccharide ayant de 2 à 50 unités ose liées entre elles de façon covalente, et des polysaccharides ayant plus de 50 unités ose liées entre elles de façon covalente pouvant être contenus sans dépasser 0,01% en poids par rapport aux oligosaccharides/polysaccharides totaux.

2. - Utilisation selon la revendication 1, **caractérisée par le fait que** les algues rouges agarophytes sont choisies parmi celles des genres *Gelidium* et *Gracilaria.*

3. - Utilisation selon la revendication 2, **caractérisée par le fait que** l'algue rouge agarophyte est *Gelidium sesquipedale.*

4. - Utilisation selon l'une des revendications 1 à 3, **caractérisée par le fait que** l'extrait ou la fraction d'extrait contient, comme oligosaccharide(s), au moins un oligosaccharide natif ou substitué choisi parmi :
- un (Gal)n-Glycérol avec Gal = unité galactose et 2 ≤ n ≤ 4 ;
- un disaccharide constitué de deux unités hexose ;
- un disaccharide constitué de deux unités acide galacturonique.

5. - Utilisation selon l'une des revendications 1 à 4, **caractérisée par le fait que** l'extrait ou la fraction d'extrait contient aussi au moins un monosaccharide natif ou substitué par du glycérol ou par un méthyle.

6. - Utilisation selon la revendication 5, **caractérisée par le fait que** le ou les monosaccharides sont choisis parmi le floridoside/isofloridoside (Gal-glycérol), le 3,6-anhydrogalactose, l'acide galacturonique, les hexoses ou les pentoses.

7. - Utilisation selon l'une des revendications 1 à 6, **caractérisée par le fait que** ledit extrait consiste en un extrait :
- par une solution aqueuse alcaline à pH basique, notamment par de la soude à 0,1 - 10% en poids, de préférence 2-5% en poids, en faisant suivre par une neutralisation par un acide et par une élimination au moins partielle des polysaccharides ayant plus de 50 unités ose reliées entre elles de façon covalente ; ou
- par une solution hydroalcoolique, l'alcool ayant par la suite été éliminé ; ou
- par un alcool tel que l'éthanol, l'alcool ayant par la suite été éliminé,
un extrait pouvant également être : l'une des phases aqueuses obtenues par les filtrations effectuées lors du procédé d'extraction de l'agar à partir d'une algue rouge agarophyte respectivement après traitement alcalin de l'algue, après rinçage à l'eau du résidu ainsi obtenu, après neutralisation à l'acide du résidu obtenu lors de ce rinçage, après rinçage à l'eau du résidu obtenu lors de cette neutralisation ; ou l'extrait obtenu par l'extraction à chaud du résidu obtenu en même temps que le gel d'agar lors d'une extraction à chaud/filtration du résidu obtenu après ce dernier rinçage à l'eau ; et le jus de synérèse obtenu après congélationdécongélation et/ou par pressage mécanique de ce gel d'agar, et une fraction d'extrait résulte d'un fractionnement d'un extrait par ultrafiltration ou par chromatographie d'exclusion stérique,
ledit extrait ou ladite fraction d'extrait pouvant ensuite avoir été concentré, déshydraté ou lyophilisé.

8. - Utilisation selon l'une des revendications 1 à 7, **caractérisée par le fait que** l'extrait ou la fraction d'extrait a été préparé(e) par un procédé suivant lequel on a conduit une extraction aqueuse, alcoolique ou hydroalcoolique, à chaud, de ladite ou desdites algues rouges agarophytes, avec élimination ultérieure de l'alcool dans le cas d'une extraction alcoolique ou hydroalcoolique, ladite extraction pouvant être une extraction aqueuse alcaline, en particulier une extraction aqueuse alcaline, suivant laquelle on obtient, après ledit traitement alcalin et par filtration, d'une part, une phase aqueuse (A1) et d'autre part un résidu (R1) ;
puis on peut effectuer un rinçage à l'eau distillée dudit résidu (R1) pour obtenir après filtration d'une part une phase aqueuse (A2) et d'autre part un résidu (R2) ;
puis on peut effectuer une neutralisation à l'acide dudit résidu (R2) pour obtenir, après filtration, d'une part une phase aqueuse (A3) et d'autre part un résidu (R3) ;
puis on peut effectuer un rinçage à l'eau distillée dudit résidu (R3) pour obtenir, après filtration, d'une part, une phase aqueuse (A4) et, d'autre part, un résidu (R4) ;
puis on peut effectuer une extraction à chaud et une filtration dudit résidu (R4) pour obtenir d'une part un résidu (R5) et, d'autre part, un gel d'agar ;
puis on peut conduire une extraction à l'eau chaude dudit résidu (R5) pour obtenir une phase aqueuse (A5) ;
puis on peut conduire une congélation - décongélation et/ou pressage mécanique dudit gel d'agar pour obtenir d'une part, un jus de synérèse (JS) et un gel d'agar pur ; lesdites phases aqueuses (A1) à (A5) et ledit jus de synérèse (JS) représentant chacun également un extrait recherché,
ledit extrait pouvant être soumis à un traitement par l'éthanol pour obtenir d'une part, un extrait éthanolique (EE) et d'autre part un précipité, ledit extrait éthanolique étant soumis à un fractionnement par ultrafiltration ou par exclusion stérique permettant d'isoler une fraction d'extrait contenant au moins un oligosaccharide ayant de 2 à 50 unités ose reliées entre elles de façon covalente, et des polysaccharides ayant plus de 50 unités ose liées entre elles de façon covalente pouvant être contenus sans dépasser 0,01% en poids par rapport aux oligosaccharides/polysaccharides totaux,
ledit extrait ou ladite fraction d'extrait pouvant ensuite avoir été concentré, déshydraté ou lyophilisé.

9. - Utilisation selon l'une des revendications 1 à 8, **caractérisée par le fait que** l'extrait ou la fraction d'extrait se trouve en milieu aqueux, ou se présente sous forme pulvérulente.

10. - Procédé pour stimuler la défense naturelle chez une plante terrestre, **caractérisé par le fait qu'**il consiste à appliquer sur l'ensemble de la plante ou sur une partie de celle-ci, comprenant l'appareil végétatif, racinaire, les fruits, les graines et les semences de ladite plante, ou encore sur le sol ou le substrat de culture de la plante, une quantité efficace pour stimuler les défenses naturelles, de ladite plante, de l'extrait ou de la fraction d'extrait tel (le) que défini (e) à l'une des revendications 1 à 9, à l'état liquide ou sous forme de poudre ou de granules.

11. - Procédé selon la revendication 10, **caractérisé par le fait que** l'on traite les plantes agronomiquement utiles, de grande culture, dont les oléagineux comme le tournesol ou le soja, les protéagineux comme le pois chiche, les céréales comme le maïs ou le blé, les arbres fruitiers comme les poiriers, les pommiers, les nectariniers, les plantes horticoles comme les rosiers, les plantes prairiales, et les plantes maraîchères comme la tomate, le melon, la laitue ou les épinards.

12. - Procédé selon l'une des revendications 10 et 11, **caractérisé par le fait qu'**on applique l'extrait liquide ou la fraction d'extrait liquide sur la plante ou partie de plante ou graines ou semences ou sur le sol ou substrat à une concentration d'oligosaccharide(s) de 0,0001 à 100 g/L, de préférence de 1 à 10 mg/L.

13. - Procédé selon l'une des revendications 10 à 12, **caractérisé par le fait que** l'on applique l'extrait ou la fraction d'extrait à l'état liquide ou sous forme de poudre ou de granules à raison de 1 à 1000 g d'oligosaccharides par hectare.

14. - Procédé selon l'une des revendications 10 à 13, **caractérisé par le fait que** l'on effectue l'application 1 à 20 fois, de préférence 3 à 5 fois par année de culture.

15. - Composition pour la mise en oeuvre du procédé selon l'une des revendications 10 à 14, **caractérisée par le fait qu'**elle consiste en un extrait ou fraction d'extrait tel (le) que défini(e) à l'une des revendications 3 à 8 et 9 dans sa dépendance des revendications 3 à 8, à l'état liquide ou sous forme de poudre ou de granules et le cas échéant incorporé dans un produit phytosanitaire ou fertilisant ou avec au moins un adjuvant choisi parmi les tensio-actifs, les dispersants, les agents conservateurs, les antimottants, les oligoéléments, les amendements, les éléments correcteurs de carence, les fongicides, les insecticides, les herbicides, les hormones de croissance.

## Patentansprüche

1. - Verwendung als Abwehrelizitor/-stimulator bei Bodenpflanzen eines Extraktes oder einer Extraktfraktion mindestens einer Agarophyt-Rotalge, wobei der Extrakt oder die Extraktfraktion mindestens ein Oligosaccharid mit 2 bis 50 Ose-Einheiten, die untereinander auf kovalente Weise verbunden sind, enthält, und wobei Polysaccharide mit mehr als 50 Ose-Einheiten, die untereinander auf kovalente Weise verbunden sind, enthalten sein können, ohne 0,01 Gew% mit Bezug auf die gesamten Oligosaccharide/Polysaccharide zu übersteigen.

2. - Verwendung nach Anspruch 1, **dadurch gekennzeichnet, dass** die Agarophyt-Rotalgen ausgewählt sind aus denjenigen der Gattungen *Gelidium* und *Gracilaria.*

3. - Verwendung nach Anspruch 2, **dadurch gekennzeichnet, dass** die Agarophyt-Rotalge *Gelidium sesquipedale* ist.

4. - Verwendung nach einem der Ansprüche 1 bis 3, **dadurch gekennzeichnet, dass** der Extrakt oder die Extraktfraktion als Oligosaccharid(e) mindestens ein natives oder substituiertes Oligosaccharid enthält, ausgewählt aus:
- (Gal)n-Glycerin wobei Gal = Galactose-Einheit und 2 ≤ n ≤ 4;
- Disaccharid, das aus zwei Hexoseeinheiten besteht;
- Disaccharid, das aus zwei Galacturonsäure-Einheiten besteht.

5. - Verwendung nach einem der Ansprüche 1 bis 4, **dadurch gekennzeichnet, dass** der Extrakt oder die Extraktfraktion auch mindestens ein natives oder durch Glycerin oder ein Methyl substituiertes Monosaccharid enthält.

6. - Verwendung nach Anspruch 5, **dadurch gekennzeichnet, dass** das oder die Monosaccharid(e) ausgewählt sind aus Floridosid/Isofloridosid (Gal-Glycerin), 3,6-Anhydrogalactose, Galacturonsäure, Hexosen oder Pentosen.

7. - Verwendung nach einem der Ansprüche 1 bis 6, **dadurch gekennzeichnet, dass** der Extrakt aus einem Extrakt besteht:
- durch eine alkaline wässrige Lösung mit basischem pH, insbesondere durch Soda mit 0,1 - 10 Gew%, vorzugsweise von 2 - 5 Gew% gefolgt von einer Neutralisierung durch eine Säure und durch eine mindestens teilweise Elimination der Polysaccharide mit mehr als 50 Ose-Einheiten, die untereinander auf kovalente Weise verbunden sind; oder
- durch eine hydroalkoholische Lösung, wobei der Alkohol in der Folge eliminiert wurde; oder
- durch einen Alkohol wie z. B. Ethanol, wobei der Alkohol in der Folge eliminiert wurde,
wobei ein Extrakt auch Folgendes sein kann: eine der wässrigen Phasen, erhalten durch die Filtrationen, die beim Verfahren zur Extraktion von Agar ausgehend von einer Agarophyt-Rotalge bzw. nach einer alkalinen Behandlung der Alge, nach dem Spülen mit Wasser des so erhaltenen Rückstands, nach der Neutralisierung mit der Säure des Rückstands, erhalten bei dieser Spülung, nach der Spülung mit Wasser des Rückstands, erhalten bei dieser Neutralisierung, durchgeführt werden; oder der Extrakt, erhalten durch Heißextraktion des Rückstands, erhalten zur gleichen Zeit wie das Agargel bei einer Heißextraktion/Filtration des Rückstands, erhalten nach dieser letzten Spülung mit Wasser; und der Synerese-Saft, erhalten nach dem Einfrieren/Auftauen und/oder durch mechanisches Pressen dieses Agargels, und eine Extraktfraktion sich aus einer Fraktionierung eines Extrakts durch Ultrafiltration oder durch Grössenausschlusschromatographie ergibt,
wobei der Extrakt oder die Extraktfraktion dann konzentriert, dehydriert oder lyophilisiert worden sein kann.

8. - Verwendung nach einem der Ansprüche 1 bis 7, **dadurch gekennzeichnet, dass** der Extrakt oder die Extraktfraktion durch ein Verfahren hergestellt wurde, gemäß dem eine wässrige, alkoholische oder hydroalkoholische Heißextraktion von der oder von den Agarophyt-Rotalgen durchgeführt wurde, mit späterer Elimination des Alkohols für den Fall einer alkoholischen oder hydroalkoholischen Extraktion, wobei die Extraktion eine alkaline wässrige Extraktion sein könnte, insbesondere eine alkaline wässrige Extraktion, gemäß der, nach der alkalischen Behandlung und durch Filtrierung, einerseits eine wässrige Phase (A1) und andererseits ein Rückstand (R1) erhalten wird;
dann kann eine Spülung mit destilliertem Wasser des Rückstands (R1) durchgeführt werden, um nach der Filterung einerseits eine wässrige Phase (A2) und andererseits einen Rückstand (R2) zu erhalten;
dann kann eine Neutralisation mit der Säure des Rückstands (R2) durchgeführt werden, um nach der Filterung einerseits eine wässrige Phase (A3) und andererseits einen Rückstand (R3) zu erhalten;
dann kann eine Spülung mit destilliertem Wasser des Rückstands (R3) durchgeführt werden, um nach der Filterung einerseits eine wässrige Phase (A4) und andererseits einen Rückstand (R4) zu erhalten;
dann kann eine Heißextraktion und eine Filterung des Rückstands (R4) durchgeführt werden, um einerseits einen Rückstand (R5) und andererseits ein Agargel zu erhalten;
dann kann eine Extraktion mit heißem Wasser des Rückstands (R5) durchgeführt werden, um eine wässrige Phase (A5) zu erhalten;
dann kann ein Einfrieren - Auftauen und/oder ein mechanisches Pressen des Agargels durchgeführt werden, um einerseits einen Synärese-Saft (JS) und ein reines Agargel zu erhalten;
wobei die wässrigen Phasen (A1) bis (A5) und der Synäresesaft (JS) jeweils einen gesuchten Extrakt darstellen,
wobei der Extrakt einer Behandlung durch Ethanol unterzogen werden kann, um einerseits einen Ethanol-Extrakt (EE) und andererseits eine Ausfällung zu erhalten, wobei der Ethanol-Extrakt einer Fraktionierung durch Ultrafiltration oder durch Größenausschlusschromatographie unterzogen wird, die ermöglicht, eine Extraktfraktion zu isolieren, die mindestens ein Oligosaccharid mit 2 bis 50 Ose-Einheiten enthält, die untereinander auf kovalente Weise verbunden sind, und wobei Polysaccharide mit mehr als 50 Ose-Einheiten, die untereinander auf kovalente Weise verbunden sind, enthalten sein können, ohne 0,01 Gew% mit Bezug auf die gesamten Oligosaccharide/Polysaccharide zu übersteigen.
wobei der Extrakt oder die Extraktfraktion dann konzentriert, dehydriert oder lyophilisiert worden sein können.

9. - Verwendung nach einem der Ansprüche 1 bis 8, **dadurch gekennzeichnet, dass** sich der Extrakt oder die Extraktfraktion im wässrigem Medium befindet oder in Pulverform vorhanden ist.

10. - Verfahren zur Stimulation der natürlichen Abwehr bei einer Bodenpflanze, **dadurch gekennzeichnet, dass** es darin besteht, auf die Gesamtheit der Pflanze oder auf einen Teil dieser, umfassend das vegetative System, das Wurzelsystem, die Früchte, die Samen oder die Saat der Pflanze, oder auch auf den Boden oder das Nährsubstrat der Pflanze eine wirksame Menge, um die natürliche Abwehr der Pflanze, des Extrakts oder die Extraktfraktion zu stimulieren, wie in einem der Ansprüche 1 bis 9 definiert, in flüssigem Zustand oder in Form eines Pulvers oder von Körnchen anzuwenden.

11. - Verfahren nach Anspruch 10, **dadurch gekennzeichnet, dass** landwirtschaftlich nützliche Großanbaupflanzen darunter Ölsaaten wie Sonnenblumen oder Soja, Eiweißpflanzen wie Kichererbsen, Getreide wie Mais oder Weizen, Obstbäume wie Birnbäume, Apfelbäume, Nektarinenbäume, Gartenpflanzen wie Rosen, Weidepflanzen und Gemüsepflanzen wie Tomate, Melone, grüner Salat oder Spinat behandelt werden.

12. - Verfahren nach einem der Ansprüche 10 und 11, **dadurch gekennzeichnet, dass** der flüssige Extrakt oder die flüssige Extraktfraktion auf die Pflanze oder den Teil der Pflanze oder die Samen oder die Saat oder auf den Boden oder das Substrat in einer Konzentration von Oligosaccharid(en) von 0,0001 bis 100 g/L, vorzugsweise von 1 bis 10 mg/L aufgebracht wird.

13. - Verfahren nach einem der Ansprüche 10 bis 12, **dadurch gekennzeichnet, dass** der Extrakt oder die Extraktfraktion in flüssigem Zustand oder in Form eines Pulvers oder von Körnchen in einer Menge von 1 bis 1000 Oligosacchariden pro Hektar aufgebracht wird.

14. - Verfahren nach einem der Ansprüche 10 bis 13, **dadurch gekennzeichnet, dass** die Aufbringung 1 bis 20 Mal, vorzugsweise 3 bis 5 Mal pro Anbaujahr durchgeführt wird.

15. - Zusammensetzung für die Durchführung des Verfahrens nach einem der Ansprüche 10 bis 14, **dadurch gekennzeichnet, dass** sie aus einem Extrakt oder einer Extraktfraktion, wie in einem der Ansprüche 3 bis 8 und 9 in Abhängigkeit von Anspruch 3 bis 8 definiert, in flüssigem Zustand oder in Form eines Pulvers oder von Körnchen besteht, und gegebenenfalls eingeschlossen in einem Pflanzenschutz- oder Düngemittel oder mit mindestens einem Adjuvans, ausgewählt aus Tensiden, Dispersionsmitteln, Konservierungsstoffen, Trennmitteln, Spurenelementen, Düngern, Elementen zur Korrektur von Mangelerscheinungen, Fungiziden, Insektiziden, Herbiziden, Wachstumshormonen.

## Claims

1. - Use as a defense elicitor/stimulator in terrestrial plants of an extract or an extract fraction of at least one agarophyte red alga, said extract or said extract fraction containing at least one oligosaccharide having 2 to 50 ose units covalently bound to one another, wherein polysaccharides having more than 50 ose units covalently bound to one another can be contained without exceeding 0.01% by weight relative to the total oligosaccharides/polysaccharides.

2. - Use according to claim 1, **characterized in that** the agarophyte red algae are chosen from those of the genera *Gelidium* and *Gracilaria.*

3. - Use according to claim 2, **characterized in that** the agarophyte red alga is *Gelidium sesquipedale.*

4. - Use according to one of claims 1 to 3, **characterized in that** the extract or the extract fraction contains, as oligosaccharide(s), at least one native or substituted oligosaccharide chosen from:
- a (Gal)n-Glycerol with Gal = galactose unit and 2 ≤ n ≤ 4;
- a disaccharide consisting of two hexose units;
- a disaccharide consisting of two galacturonic acid units.

5. - Use according to one of claims 1 to 4, **characterized in that** the extract or the extract fraction also contains at least one monosaccharide chosen from native monosaccharides and monosaccharides substituted with glycerol or with a methyl.

6. - Use according to claim 5, **characterized in that** the one or more monosaccharides are chosen from floridoside/isofloridoside (Gal-glycerol), 3,6-anhydrogalactose, galacturonic acid, hexoses or pentoses.

7. - Use according to one of claims 1 to 6, **characterized in that** said extract consists of an extract:
- by an alkaline aqueous solution at basic pH, in particular by sodium hydroxide at 0.1-10% by weight, preferably 2-5% by weight, followed by neutralization with an acid and at least partial removal of polysaccharides having more than 50 ose units covalently bound to one another; or
- by a hydroalcoholic solution, the alcohol having subsequently been removed; or
- by an alcohol such as ethanol, the alcohol having subsequently been removed,
an extract which may also be: one of the aqueous phases obtained by the filtrations carried out during the method of extracting the agar from an agarophyte red alga respectively after alkaline treatment of the alga, after rinsing the residue thus obtained with water, after neutralization with acid of the residue obtained during this rinsing, after rinsing the residue obtained during this neutralization with water; or the extract obtained by the hot extraction of the residue obtained at the same time as the agar gel during hot extraction/filtration of the residue obtained after this last rinsing with water; and the syneresis juice obtained after freeze-thawing and/or mechanical pressing of this agar gel, and an extract fraction results from fractionation of an extract by ultrafiltration or size exclusion chromatography,
said extract or extract fraction may then have been concentrated, dehydrated or lyophilized.

8. - Use according to one of claims 1 to 7, **characterized in that** the extract or the extract fraction has been prepared by a method according to which an aqueous, alcoholic or hydroalcoholic extraction has been carried out, while hot, of the one or more agarophyte red algae, with subsequent removal of the alcohol in the case of an alcoholic or hydroalcoholic extraction, wherein said extraction can be an aqueous alkaline extraction, in particular an aqueous alkaline extraction, according to which, after the alkaline treatment and by filtration, is obtained, on the one hand, an aqueous phase (A1) and on the other hand a residue (R1);
then a rinsing with distilled water of said residue (R1) may be carried out to obtain after filtration, on the one hand, an aqueous phase (A2) and, on the other hand, a residue (R2);
then acid neutralization of said residue (R2) can be carried out to obtain, after filtration, on the one hand, an aqueous phase (A3) and, on the other hand, a residue (R3) ;
then a rinsing of said residue (R3) can be carried out with distilled water to obtain, after filtration, on the one hand, an aqueous phase (A4) and, on the other hand, a residue (R4);
then a hot extraction and a filtration of said residue (R4) can be carried out to obtain, on the one hand, a residue (R5) and, on the other hand, an agar gel;
then an extraction with hot water of said residue (R5) can be carried out to obtain an aqueous phase (A5);
then a freeze-thawing and/or mechanical pressing of the agar gel can be carried out to obtain, on the one hand, a syneresis juice (JS) and a pure agar gel;
said aqueous phases (A1) to (A5) and the syneresis juice (JS) each also representing a desired extract,
said extract can be subjected to a treatment with ethanol to obtain, on the one hand, an ethanolic extract (EE) and, on the other hand, a precipitate, said ethanolic extract being subjected to fractionation by ultrafiltration or by size exclusion chromatography allowing isolation of an extract fraction containing at least one oligosaccharide having from 2 to 50 ose units covalently bound to one another, and wherein polysaccharides having more than 50 ose units covalently bound to one another can be contained without exceeding 0.01% by weight relative to total oligosaccharides/polysaccharides,
wherein said extract or extract fraction can then have been concentrated, dehydrated or lyophilized.

9. - Use according to one of claims 1 to 8, **characterized in that** the extract or the extract fraction is in an aqueous medium, or is in the form of powder.

10. - Method for stimulating natural defense in a terrestrial plant, **characterized in that** it consists in applying to the whole of the plant or to a part thereof, comprising the vegetative apparatus, root system, fruit, grains and seeds of the plant, or on the soil or substrate for culturing the plant, an amount sufficiently effective to stimulate the natural defenses of the plant, of the extract or of the extract fraction such as defined in one of claims 1 to 9, in the liquid state or in the form of powder or granules.

11. - Method according to claim 10, **characterized in that** are treated agronomically useful crop plants, including oilseeds such as sunflower or soy, protein crops such as chickpea, cereals such as corn or wheat, fruit trees such as pear trees, apple trees, nectarine trees, horticultural plants such as rose bushes, grassland plants, and market garden plants such as tomato, melon, lettuce or spinach.

12. - Method according to one of claims 10 and 11, **characterized in that** the liquid extract or liquid extract fraction is applied to the plant or part of the plant or grains or seeds or on the soil or substrate at a concentration of oligosaccharide(s) of 0.0001 to 100 g/L, preferably 1 to 10 mg/L.

13. - Method according to one of claims 10 to 12, **characterized in that** the extract or the extract fraction is applied in the liquid state or in the form of powder or granules at a rate of 1 to 1000 g of oligosaccharides per hectare.

14. - Method according to one of claims 10 to 13, **characterized in that** the application is carried out 1 to 20 times, preferably 3 to 5 times, per year of culture.

15. - Composition for the implementation of the method according to one of claims 10 to 14, **characterized in that** it consists of an extract or an extract fraction as defined in one of claims 3 to 8 and 9 in its dependency of claims 3 to 8, in the liquid state or in the form of powder or granules and, where appropriate, incorporated in a phytosanitary or fertilizer product or with at least one adjuvant chosen from surfactants, dispersants, preservatives, anti-caking agents, trace elements, soil conditioners, deficiency-correcting agents, fungicides, insecticides, herbicides, growth hormones.
